Europäisches Patentamt

European Patent Office

Office européen des brevets

(11) Numéro de publication : **0 294 283 B1**

(12) **FASCICULE DE BREVET EUROPEEN**

(45) Date de publication du fascicule du brevet :
08.04.92 Bulletin 92/15

(51) Int. Cl.⁵ : **G21C 17/02**

(21) Numéro de dépôt : **88401316.0**

(22) Date de dépôt : **31.05.88**

(54) **Procédé et dispositif de mesure de la concentration en lithium dans le circuit primaire de refroidissement d'un réacteur nucléaire.**

(30) Priorité : **02.06.87 FR 8707690**

(43) Date de publication de la demande :
**07.12.88 Bulletin 88/49**

(45) Mention de la délivrance du brevet :
**08.04.92 Bulletin 92/15**

(84) Etats contractants désignés :
**BE CH DE ES GB IT LI NL**

(56) Documents cités :
**EP-A- 0 094 884
EP-A- 0 161 844
EP-A- 0 220 666
DE-A- 3 515 051
US-A- 1 450 023
JOURNAL OF THE BRITISH NUCLEAR
ENERGY SOCIETY, vol. 26, no. 2, avril 1987,
pages 65-73, Londres, GB; M.E. PICK: "4th
International conference on water chemistry
of nuclear reactor systems"**

(73) Titulaire : **ELECTRICITE DE FRANCE Service
National
2, rue Louis Murat
F-75008 Paris (FR)**

(72) Inventeur : **Nepveu de Villemarceau, Christian
208, avenue Jean Lurçat
F-77190 Dammarie Les Lys (FR)**
Inventeur : **Pereira, Jean-Luc
2, rue Principale Manicamp
F-02300 Chauny (FR)**
Inventeur : **Blin, Jean-Pierre
176, rue du Lieutenant Moisan
F-77190 Dammarie Les Lys (FR)**
Inventeur : **Arzel, Anne-Marie
68, avenue de la Libération
F-77350 Le Mee Sur Seine (FR)**
Inventeur : **Livigni, Didier
20, avenue de la République
F-45360 Chatillon Sur Loire (FR)**

(74) Mandataire : **Martin, Jean-Jacques et al
Cabinet REGIMBEAU 26, Avenue Kléber
F-75116 Paris (FR)**

## Description

La présente invention est relative à un procédé et à un dispositif de mesure de la concentration en lithium dans le circuit primaire de refroidissement du réacteur à eau pressurisée d'une centrale nucléaire.

Dans l'eau de refroidissement du réacteur d'une centrale nucléaire de la filière réacteur à eau pressurisée, il est nécessaire d'introduire du bore sous forme d'acide borique afin de réguler le flux de neutrons. Ce circuit de refroidissement est appelé circuit primaire.

Au cours d'un cycle de production, c'est-à-dire au cours du fonctionnement du réacteur entre deux rechargements de combustible, la concentration en bore varie d'environ 2000 ppm, parties par million, à quasiment zéro.

Dans le circuit de refroidissement, les produits de corrosion deviennent radioactifs après leur passage dans le coeur du réacteur. Ces produits sont pour partie responsables de l'irradiation reçue par les personnels d'exploitation et d'entretien des centrales nucléaires.

Des études effectuées à l'aide du code de calcul PACTOLE établi par le Commissariat à l'Energie Atomique en France ont montré que l'on pouvait diminuer sensiblement la quantité de ces produits radioactifs en maintenant un pH constant dans l'eau du circuit primaire et, en conséquence, l'intensité du rayonnement radioactif et la dose absorbée par les personnels de maintenance. Dans ce but, il est donc avantageux de neutraliser partiellement l'acide borique en injectant dans le circuit primaire de refroidissement une base telle que la lithine (LioH).

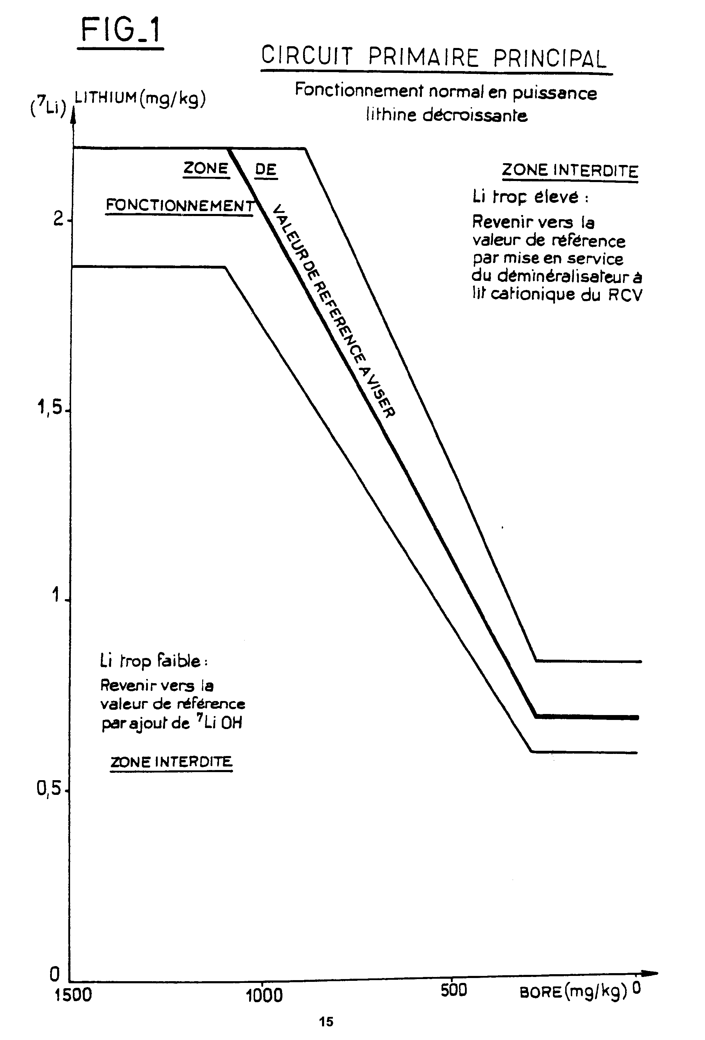

Ainsi, au cours d'une cycle de production, la loi de variation de la concentration en lithine et en bore dans le circuit primaire de refroidissement, pour le maintien d'un pH constant, est représenté en figure 1.

Afin de respecter la loi de variation de concentration en lithine représentée en figure 1, loi de variation connue sous le nom de spécification lithine décroissante, il est possible, comme l'indique le document EP-A-0 094 884, d'effectuer des mesures de concentration de lithium dans le circuit primaire de refroidissement. Dans ce but, un échantillon d'eau de refroidissement est prélevé et la mesure de la concentration en lithium est effectuée par spectrométrie d'absorption atomique. Si la concentration en lithine n'est pas satisfaisante, il faut l'ajuster dans le circuit et refaire une mesure pour vérifier que la nouvelle concentration mesurée satisfait à la spécification lithine décroissante précitée. L'ensemble des opérations précitées nécessite la mise en oeuvre d'étapes de mise en oeuvre de durée importante et, en outre, le réglage de la concentration en lithine est peu aisé à mettre en oeuvre dans la mesure où le dosage en quantité de lithine même s'il atteint une précision suffisante, ne peut guère être valablement assuré sans tenir compte du temps de réponse de l'ensemble du circuit primaire de refroidissement pour atteindre la valeur de pH souhaitée.

Par ailleurs, il est connu du document EP-A-0 161 844, d'utiliser la conductibilité électrique pour contrôler l'introduction d'un liquide dans un autre.

Le procédé et le dispositif, objets de l'invention ont pour but de remédier aux inconvénients précités par la mise en oeuvre d'un procédé et d'un dispositif de mesure en continu de la concentration en lithium dans l'eau de refroidissement des circuits primaires des centrales nucléaires à eau pressurisée, par la mesure de la conductibilité électrique de l'eau de refroidissement.

Un autre objet du procédé et du dispositif, objets de l'invention est, de par la mise en oeuvre du procédé et du dispositif objets de l'invention, la réalisation d'un processus de régulation du pH de l'eau de refroidissement permettant une optimalisation du temps de réponse du circuit primaire de refroidissement pour obtenir la valeur de pH souhaitée de l'eau de refroidissement.

Un autre objet du procédé et du dispositif, objets de la présente invention est enfin une mise en oeuvre totalement automatisée d'un processus de régulation de la concentration en lithium et donc du pH de l'eau de refroidissement des circuits primaires des centrales nucléaires à eau pressurisée.

Selon l'invention, un procédé de mesure de la concentration en lithium dans le circuit primaire de refroidissement du réacteur à eau pressurisée d'une centrale nucléaire, ledit procédé consistant à mesurer la conductivité électrique $\lambda$ de l'eau de refroidissement dudit circuit primaire, ou d'un échantillon de celle-ci, à déterminer la concentration en lithium par corrélation linéaire entre ladite conductivité électrique $\lambda$ de l'eau de refroidissement et cette concentration, à partir d'une combinaison linéaire de la conductivité électrique de la forme

$$[\overset{+}{Li}] = \alpha . \lambda + \beta$$

relation dans laquelle :

$[\overset{+}{Li}]$ représente la concentration en ion lithium exprimée en partie par millions,

$\alpha$ représente un coefficient de proportionnalité

$\beta$ représente un terme correctif de présence d'impuretés éventuelles de l'eau de refroidissement du circuit primaire, le terme $\beta$ étant déterminé par mesure auxiliaire périodique de la concentration en lithium par spectrométrie d'absorption atomique,

ladite conductivité électrique $\lambda$ de l'eau de refroidissement étant une fonction linéaire de la température, la conductivité $\lambda$ (t) mesurée à une température t donnée vérifiant la relation :

$$\lambda(25) = \lambda(t) + a \cdot [25 - t]$$

relation dans laquelle :

$\lambda(25)$ représente la conductivité de l'eau de refroidissement à 25°C,

a représente un coefficient variant en fonction de la concentration en lithium,

est remarquable en ce que le coefficient a variant en fonction de la concentration en lithium suivant une relation de la forme

$$a = 0.223 \, [\overset{+}{Li}] + 0,03,$$

ledit procédé consiste :

− à mesurer la température de l'eau de refroidissement,

− à déterminer une valeur approchée de a pour une valeur de référence de concentration en lithium notée

$$\left[ \overset{+}{Li}_{r} \right],$$

la concentration en lithium de l'eau de refroidissement à la température t étant déterminée par la relation :

$$\left[ \overset{+}{Li} \right] = 0{,}1 \left[ \lambda(t) + (0{,}223 \left[ \overset{+}{Li}_{r} \right] + 0{,}03)(25 - t) \right] + \beta.$$

Le dispositif de mesure de la concentration en lithium dans le circuit primaire de refroidissement du réacteur à eau pressurisée d'une centrale nucléaire, objet de l'invention, est remarquable en ce qu'il comporte des moyens de mesure de la conductivité électrique de l'eau de refroidissement du circuit primaire, des moyens de mesure de la température de l'eau de refroidissement du circuit primaire et des moyens de calcul de la concentration en lithium conformément au procédé de l'invention.

Le procédé et le dispositif , objets de l'invention trouvent application particulièrement avantageuse à la régulation en continu automatisée du pH de l'eau de refroidissement du circuit primaire de refroidissement à eau pressurisée des centrales nucléaires.

Le procédé et le dispositif, objets de l'invention seront mieux compris à la lecture de la description et des dessins ci-après dans lesquels, outre la figure 1, relative à la loi de la variation de la concentration en lithium dans le circuit primaire de refroidissement au cours d'un cycle de production du réacteur, loi de variation connue sous le nom de spécification lithine décroissante,

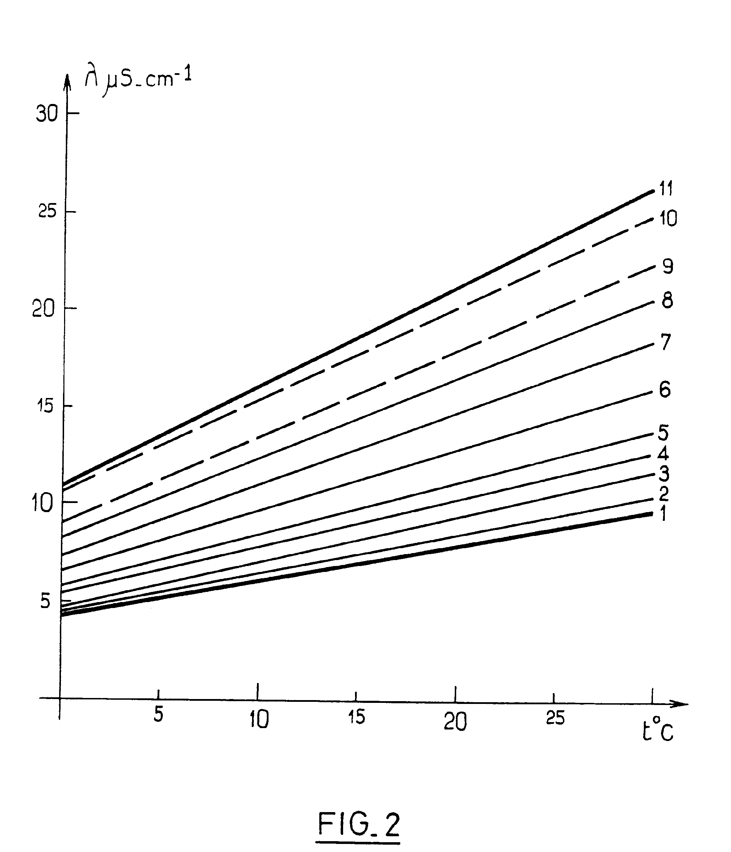

− la figure 2 représente un diagramme représentatif de la variation de la conductivité de l'eau de refroidissement en fonction de la température pour différentes concentrations en lithium et en bore,

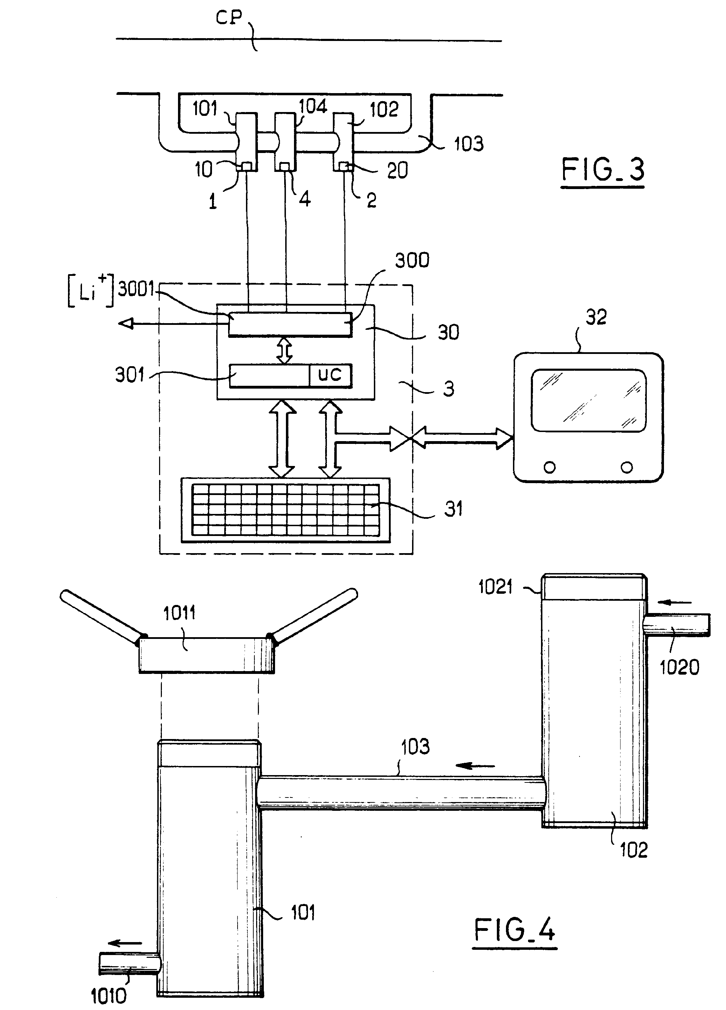

− la figure 3 représente un schéma synoptique d'un dispositif de mesure de la concentration en lithium.

Le procédé de mesure de la concentration en lithium dans le circuit primaire de refroidissement du réacteur à eau pressurisée d'une centrale nucléaire, objet de l'invention, sera tout d'abord décrit en liaison avec les figures 1 et 2 notamment.

Celui-ci consiste à mesurer la conductivité électrique $\lambda$ de l'eau de refroidissement du circuit primaire et à déterminer la concentration en lithium par corrélation linéaire entre la conductivité électrique $\lambda$ précitée et cette concentration.

Ainsi, la concentration en lithium peut être déterminée à partir d'une combinaison linéaire de la conductivité électrique de la forme :

$$(1) \qquad [Li^+] = \alpha \cdot \lambda + \beta$$

Dans cette relation,

$[Li^+]$ représente la concentration en ion lithium exprimée en partie par millions,

$\alpha$ représente un coefficient de proportionnalité sans dimension,

$\beta$ représente un terme correctif de présence d'impuretés éventuelles de l'eau de refroidissement du circuit primaire.

Le terme $\beta$ peut avantageusement être déterminé par mesure auxiliaire périodique de la concentration en lithium par spectrométrie d'absorption atomique par exemple.

Le procédé, objet de l'invention tel que précédemment décrit peut, bien entendu, être mis en oeuvre à titre d'exemple non limitatif pour un circuit primaire dont l'eau de refroidissement présente une température considérée comme sensiblement constante. Bien entendu, la précision de mesure du paramètre de conductivité électrique par exemple est alors affectée car des expériences ont montré que la conductivité électrique de l'eau de refroidissement, ou échantillon, dépend en fait de la température.

Au cours des essais effectués, pour la mise en oeuvre du procédé objet de l'invention, on a pu montrer que la conductivité électrique λ de l'eau de refroidissement est en fait une fonction linéaire de la température.

La conductivité λ (t) mesurée à une température t donnée de l'eau de refroidissement précitée vérifie la relation :

$$\lambda(25) = \lambda(t) + a \cdot [25 - t]$$

Dans cette relation,

λ (25) représente la conductivité de l'eau de refroidissement à 25°C, et

a représente un coefficient variant en fonction de la concentration en lithium.

t représente le paramètre de température.

Une expérimentation conduite pour la mise en oeuvre du procédé objet de l'invention a permis d'établir la variation de la conductivité électrique λ (t) en fonction de la température pour plusieurs valeurs du couple constitué par la concentration en bore et la concentration en lithium ainsi que représentée en figure 2. Sur la figure précitée, l'axe des abcisses est gradué en degré celsius et l'axe des ordonnées en unité de conductivité électrique soit en micro siemens par centimètre. Sur la figure 2, les lois de variation de la conductivité λ en fonction de la température t correspondant aux différentes droites, notées de 1 à 11, correspondent chacune à des valeurs de couple de concentration en lithium [Li⁺] et en bore [B] correspondant aux valeurs indiquées dans le tableau ci-après.

1. $[Li^+] = 0,7$ $[B] = 5$ à $200$      6. $[Li^+] = 1,3$ $[B] = 600$

2. $[Li^+] = 0,8$ $[B] = 320$     7. $[Li^+] = 1,48$ $[B] = 700$

3. $[Li^+] = 0,9$ $[B] = 380$     8. $[Li^+] = 1,66$ $[B] = 800$

4. $[Li^+] = 1$ $[B] = 430$     9. $[Li^+] = 1,84$ $[B] = 900$

5. $[Li^+] = 1,1$ $[B] = 490$     10. $[Li^+] = 2,02$ $[B] = 1000$

                                                  11. $[Li^+] = 2,2$ $[B] = 1100$ à $1500$

La figure 2 permet ainsi d'établir la loi de variation de la conductivité électrique λ en fonction de la température de l'eau de refroidissement pour des valeurs de température t comprises entre 5 et 30°C et pour des concentrations en lithium comprises entre 0,7 et 2,2 ppm.

Ainsi qu'on le remarquera aisément sur la figure 2, le coefficient a, pente de la droite représentative de la loi de variation de la conductivité électrique en fonction de la température, varie en fonction de la concentration en lithium. On remarquera en effet que pour les valeurs de concentration en lithium indiquées dans le tableau précédent, les valeurs de concentration en bore, exprimée également en ppm correspondant aux valeurs indiquées, le coefficient a varie en fonction de la concentration en lithium suivant une relation de la forme :

$$(3) \qquad a = 0,223\,[Li^+] + 0,03,$$

Compte-tenu de la variation du coefficient a conformément à la relation précitée, le procédé objet de l'invention, consiste alors à mesurer la température de l'eau de refroidissement dans le circuit primaire, puis à déterminer une valeur approchée du coefficient a pour une valeur de référence de concentration en lithium notée

$$[Li_r^+] \qquad .$$

La concentration en lithium de l'eau de refroidissement à la température t est alors déterminée par la relation :

$$(4) \qquad [Li^+] = 0,1\left[\lambda(t) + (0,223\,[Li_r^+] + 0,03)(25 - t)\right] + 3$$

La relation précitée permet alors de déterminer la concentration en lithium de l'eau de refroidissement du circuit primaire quelque soit la température de celui-ci dans les plages normales des températures de l'échantillon de l'eau de refroidissement du réacteur et pour des concentrations d'acide borique dans l'eau de refroidissement supérieures à 5 ppm (exprimées en bore) et inférieures à 2500 ppm.

Bien entendu, afin de permettre une mise en oeuvre du procédé, objet de l'invention précédemment décrit parfaitement optimale, on indiquera ci-après un mode opératoire permettant de déterminer la valeur de concentration de référence en lithium

$$\left[ Li^+{}_r \right]$$

en fonction de la concentration de bore [B]. D'une manière avantageuse, la concentration de référence en lithium

$$\left[ Li^+{}_r \right]$$

en fonction de la concentration en bore [B] est déterminée selon la spécification précédemment dénommée spéficication "lithine décroissante" telle que représentée en figure 1.

De manière avantageuse, la valeur de concentration de référence en lithium

$$\left[ Li^+{}_r \right]$$

vérifie alors en fonction de la concentration en bore [B] les relations (5) :

$$[B] < 270 \text{ ppm} \quad \left[ Li^+{}_r \right] = 0{,}7 \text{ ppm}$$

$$270 \text{ ppm} < [B] < 1100 \text{ ppm} \quad \left[ Li^+{}_r \right] = 1{,}8 . 10^{-3} [B] + 0{,}22$$

$$[B] > 1100 \text{ ppm} \quad \left[ Li^+{}_r \right] = 2{,}2 \text{ ppm}.$$

La mise en oeuvre du procédé telle que précédemment décrit à partir des valeurs de concentration de référence en lithium précitée permet de maintenir une valeur du pH de l'eau de refroidissement du circuit primaire à une valeur comprise entre 6,5 et 7 à la température de fonctionnement et en particulier à une valeur de fonctionnement nominale correspondant à un pH de 6,83 à une température de 286°C de fonctionnement nominale.

Bien entendu, compte-tenu de la détermination des concentrations de référence en lithium $|Li^+{}_r|$ précitée, les valeurs de concentration en lithium calculées à partir des paramètres de mesure de la conductivité électrique de l'eau de refroidissement, à la température t de fonctionnement, de cette température de fonctionnement t, et des valeurs de concentration en bore effectivement mesurées s'expriment conformément aux relations (6), a,b,c,d ci-après :

a) $[B] = 0$

$$[Li^+] = \gamma \left[ \lambda(t) + a(25-t) \right] + \beta \, ; 0{,}05 < \gamma < 0{,}6 \text{ et } 0{,}1 < a < 0{,}4$$

b) $5 \text{ ppm} < [B] < 270 \text{ ppm}$

$$\left[ Li^+ \right] = 0{,}1 \left[ \lambda(t) + 0{,}1861 (25-t) \right] + \beta$$

c) $270 \text{ ppm} < [B] < 1100 \text{ ppm}$

$$\left[ Li^+ \right] = 0{,}1 \left[ \lambda(t) + (4{,}014 . 10^{-4} . [B] + 0{,}0791)(25-t) \right] + \beta.$$

d) $\left[B\right] > 1100 \ ppm$

$$\left[Li^+\right] = 0,1\left[\lambda(t) + 0,5206 \ (25-t)\right] + \beta.$$

Dans les relations précitées, β est bien entendu le paramètre tenant compte des impuretés de l'eau de refroidissement.

Dans la relation 6a précitée, c'est-à-dire pour une concentration en bore sensiblement nulle, la concentration en lithium [Li⁺] est donnée en fonction d'un paramètre de proportionalité γ lequel est compris entre 0,05 et 0,6, une concentration en bore quasiment nulle intervenant sensiblement en fin de cycle de production c'est-à-dire avant rechargement en combustible du réacteur.

Dans le procédé, objet de l'invention précédemment décrit, plus la valeur de la concentration en lithium [Li⁺] est éloignée de la valeur de référence, moins la correction de température est précise. Il est bien entendu possible de réduire ce défaut de précision en effectuant une itération sur la valeur calculée et obtenir la valeur de la concentration en lithium [Li⁺] par approximation successive ainsi que décrit précédemment.

Une description plus détaillée d'un dispositif de mesure de la concentration en lithium dans le circuit primaire de refroidissement d'un réacteur à eau pressurisée d'une centrale nucléaire conformément au procédé objet de l'invention précédemment décrit sera maintenant donné en liaison avec les figures 3 et 4.

Ainsi qu'on l'a représenté en figure 3, le dispositif objet de l'invention comporte avantageusement des moyens 1 de mesure de la conductivité électrique λ (t) de l'échantillon d'eau de refroidissement du circuit primaire. Sur la figure 3, on a noté CP le circuit primaire. En outre, le dispositif objet de l'invention comporte des moyens 2 de mesure de la température de l'eau de refroidissement du circuit primaire CP. Des moyens 3 de calcul sont prévus afin de déterminer la concentration en lithium [Li⁺] conformément au procédé, objet de l'invention précédemment décrit. En outre, ainsi qu'on l'a représenté en figure 3, le dispositif selon l'invention comporte des moyens 4 de mesure de la concentration en bore de l'eau de refroidissement.

Sur la figure 3, on a représenté l'ensemble des moyens de mesure 1, 2 et 4 implanté sur un circuit de dérivation 103, circuit du genre bipass, connecté en parallèle sur le circuit primaire CP.

Les moyens 1 de mesure de la conductivité électrique λ (t) comportent avantageusement un capteur 10 de mesure de conductivité électrique et les moyens de mesure de la température comportent une sonde de température 20. De même, les moyens de mesure 4 de la concentration en bore peuvent avantageusement être constitués par un boremètre.

Ainsi qu'il apparaît notamment en figure 3, les moyens de mesure de la conductivité électrique et de la température et en particulier le capteur 10 de mesure de conductivité électrique et la sonde de température 20 sont installés chacun dans un pot 101 permettant de minimiser la rétention de dépôts radioactifs. Un mode de réalisation advantageux des pots 101, 102 notamment sera donné ultérieurement dans la description.

Ainsi qu'on l'a également représenté en figure 3, les moyens 3 de calcul peuvent avantageusement être constitués par un ordinateur. L'ordinateur comporte une interface 30 de liaison de l'ensemble des moyens de mesure tels que les moyens 1 de mesure de la conductivité électrique, les moyens 2 de mesure de la température de l'eau de refroidissement et les moyens 4 de mesure de la concentration en bore.

De manière avantageuse, l'interface 300 comporte des moyens d'échantillonage et de numérisation des signaux représentatifs respectivement de la conductivité électrique λ (t), de la température t et de la concentration en bore, signaux délivrés par chacun des moyens de mesure précités. En outre, une unité centrale et une unité de mémoire 301 sont prévues, l'interconnection entre l'unité centrale, l'unité de mémoire 301 et l'interface 300 étant réalisée de manière classique. De manière avantageuse, l'espace mémoire de l'unité de mémoire 301 peut être subdivisé en une mémoire vive destinée à recevoir les valeurs numérisées et échantillonnées délivrées par l'interface 300 et une mémoire morte dans laquelle est implanté un programme de calcul et de détermination de la concentration en lithium conformément au procédé objet de l'invention précédemment décrit.

Selon un agencement particulièrement avantageux du dispositif objet de l'invention, le programme de calcul et de détermination de la concentration en lithium implanté dans l'espace mémoire 301 peut avantageusement comporter un programme auxiliaire ou un sous programme permettant de déterminer la valeur de concentration de référence en lithium

$$\left[Li_r^+\right]$$

en fonction de la concentration en bore B selon la spécification dite de lithine décroissante. La valeur de concentration de référence en lithium

$$\left[\mathrm{Li}_r^+\right]$$

vérifie alors en fonction de la concentration en bore B les relations (5) précédemment décrites. Bien entendu, l'agencement du programme de calcul en programme auxiliaire ou sous programme de détermination de la valeur de la concentration de référence en lithium est particulièrement avantageux en ce qu'il permet une souplesse d'utilisation du dispositif objet de l'invention, pour l'utilisateur ou opérateur, lequel peut en fonction des besoins permettre ou non l'appel du programme auxiliaire ou sous programme précité. On comprendra bien entendu que le programme de calcul et de détermination de la concentration en lithium conformément au procédé, objet de l'invention peut être agencé de manière avantageuse de façon à effectuer une lecture séquentielle des moyens de mesure 1 de la conductivité électrique λ de l'eau, des moyens 2 de mesure de la température et des moyens 4 de mesure de la concentration en bore. De manière non limitative, les séquences de lecture des moyens précités peuvent être des séquences synchrones ou asynchrones en fonction de l'installation et des paramètres physiques de celui-ci les séquences de lecture de la concentration en bore par exemple, de la température, et de la conductivité électrique de l'eau de refroidissement pouvant par exemple de manière non limitative correspondre à un nombre égal ou à un multiple de ce nombre d'une période de référence de valeur déterminée. La souplesse précitée des programmes de calcul ainsi réalisés permet en particulier d'obtenir une optimalisation du temps de réponse de l'ensemble du circuit de refroidissement lors de l'introduction de quantités correspondantes de lithine dans le circuit primaire pour assurer une régulation du pH de l'eau de refroidissement par la mise en oeuvre du procédé objet de l'invention au moyen du dispositif décrit en figure 3.

Bien entendu, l'optimalisation du temps de réponse précité est réalisé en fonction des concentrations en bore mesurées c'est-à-dire de l'instant de fonctionnement du réacteur nucléaire dans la période constituée par le cycle de production de celui-ci soit, entre deux rechargements de combustible. Bien entendu, les concentrations correspondantes en lithium sont déterminées conformément aux relations indiquées en relation 6 a,b,c,d.

De manière avantageuse, le calculateur 30 peut être constitué par un micro ordinateur par exemple celui-ci étant muni de ses ressources périphériques telles qu'un clavier 31 et un moniteur de visualisation 32. Dans ce cas, le programme de calcul précédemment cité peut avantageusement être constitué sous forme de programme de type "menu" permettant à un utilisateur de déterminer certains paramètres de fonctionnement du dispositif. En particulier, lorsque la température de l'échantillon de l'eau du circuit primaire de refroidissement peut être considérée comme sensiblement constante, il n'est pas nécessaire de mettre en oeuvre le sous programme de détermination de la concentration en bore.

Bien entendu, la valeur de la concentration en lithium [Li⁺] peut alors être directement affichée sur le moniteur de visualisation 32 de manière classique. Selon une autre caractéristique particulièrement avantageuse du dispositif objet de l'invention, la carte interface 300 peut également comporter une sortie analogique 3001 d'une carte de conversion numérique analogique classique interconnectée sur la carte interface 300, la sortie 3001 précitée permettant de délivrer un signal analogique pouvant consister en un signal variable en courant entre 4 et 20 milli ampères, ce signal étant représentatif de la concentration en lithium. Ce signal analogique peut alors être utilisé pour commander et réguler l'ouverture d'une vanne d'introduction de lithine dans le circuit primaire de refroidissement CP pour réaliser une régulation automatique du pH de l'eau de refroidissement.

Des indications relatives à un mode de réalisation pratique du dispositif objet de l'invention représenté en figure 3 seront maintenant données en liaison notamment avec la figure 4. Les moyens 1 de mesure de la conductivité électrique de l'eau de refroidissement peuvent avantageusement comporter un capteur de mesure de type industriel permettant d'avoir une information continue. Le capteur de mesure précité peut par exemple avantageusement correspondre aux spécifications du modèle de capteur de conductivité commercialisé, sous la référence 5305 modifiée, par la Société POLYMETRON-SIEGLER en FRANCE.

La sonde de température 20 peut également consister en une sonde de température de type PT 100 JUMO commercialisée par cette même Société. Les circuits d'échantillonnage et de numérisation des signaux délivrés par les moyens de mesure précités peuvent avantageusement correspondre, en ce qui concerne la mesure de la conductivité, aux spécifications du conductivimètre industriel type 8278 commercialisé par cette même Société et en ce qui concerne la mesure de la température aux spécifications du convertisseur de mesure universel type 8282 commercialisé par cette même Société.

En ce qui concerne la mesure de la concentration en bore, celle-ci est effectuée par l'intermédiaire d'un boremètre fonctionnant sur le principe de la mesure par absorption neutronique. Les circuits d'échantillonage recevant le signal représentatif de la concentration en bore délivrés par le boremètre peuvent avantageusement correspondre au spécification du convertisseur modèle 8277 commercialisé par cette même Société.

De la même façon, la carte de conversion numérique analogique délivrant sur la sortie 3001 de l'interface 300 le signal de sortie analogique concentration en lithium peut correspondre aux spécifications du convertisseur tension courant 8271 commercialisé par cette même Société.

En outre, le programme "menu" précité peut avantagement être agencé de façon que les valeurs de mesure d'étalonnage du dispositif relativement à la concentration en lithium mesure effectuée par absorption atomique, soit prise en compte par le programme de calcul ces valeurs pouvant être introduites sur incitation du programme "menu" par l'opérateur.

Ainsi qu'on l'a indiqué précédemment, les sondes de mesure de température 20 et de conductivité électrique 10 sont immergées chacune dans un pot de mesure 102 respectivement 101. Les pots de mesure 101 et 102 notamment présentent une géométrie permettant de minimiser la rétention de dépôts radioactifs éventuels.

Ainsi qu'on l'a représenté en figure 4, les pots de mesure 101 et 102 notamment sont connectés en cascade par l'intermédiaire du circuit bipass 103, les flèches indiquant le sens de circulation de l'eau de refroidissement. Les pots 101 et 102 consistent en des éléments creux sensiblement cylindriques, chacun des pots comportant un ajutage d'entrée 1020 et un ajutage de sortie 1010 respectivement reliés à la conduite bipass 103. Le pot 101 reçoit la sonde de mesure de conductivité électrique sonde représentée par 1011 et le pot 102 reçoit la sonde de mesure de températurenotée 1021. Les pots 101 et 102 et la conduite bipass 103 sont réalisés en un matériau tel que l'acier inoxydable de haute qualité par exemple. Ils présentent un volume minimum susceptible de provoquer la rétention des particules radioactives issues de la corrosion.

On a ainsi décrit un procédé et un dispositif de mesure en continu de la concentration en lithium dans le circuit primaire de refroidissement du réacteur à eau pressurisée d'une centrale nucléaire particulièrement avantageux dans la mesure où la mesure en continu précitée permet une régulation efficace du pH de l'eau de refroidissement à une valeur déterminée. Cette régulation permet notamment une optimalisation du temps de réponse des circuits de refroidissement pour le maintien du pH à la valeur souhaitée ce qui a pour effet de diminuer l'irradiation du personnel intervenant sur ces circuits.

En outre, l'injection de quantités exactement nécessaires de lithine dans le circuit primaire CP permet outre l'optimalisation des temps de réponse des circuits primaires CP pour le maintien du pH constant de l'eau de refroidissement de réaliser des économies de consommation en lithine le lithium utilisé enrichi isotopiquement en lithium 7 présentant un coût élevé.

En outre, le procédé et le dispositif objets de l'invention permettent de réduire au minimum les interventions humaines sur les circuits de refroidissement précités.

## Revendications

1. Procédé de mesure en continu de la concentration en lithium dans le circuit primaire de refroidissement du réacteur à eau pressurisée d'une centrale nucléaire, ledit procédé consistant à mesurer la conductivité électrique $\lambda$ de l'eau de refroidissement dudit circuit primaire, ou d'un échantillon de celle-ci, à déterminer la concentration en lithium par corrélation linéaire entre ladite conductivité électrique $\lambda$ de l'eau de refroidissement et cette concentration, à partir d'une combinaison linéaire de la conductivité électrique de la forme

$$[\overset{+}{Li}] = \alpha \cdot \lambda + \beta$$

relation dans laquelle :

$[\overset{+}{Li}]$ représente la concentration en ion lithium exprimée en partie par millions,

$\alpha$ représente un coefficient de proportionnalité

$\beta$ représente un terme correctif de présence d'impuretés éventuelles de l'eau de refroidissement du circuit primaire, le terme $\beta$ étant déterminé par mesure auxiliaire périodique de la concentration en lithium par spectrométrie d'absorption atomique,

ladite conductivité électrique $\lambda$ de l'eau de refroidissement étant une fonction linéaire de la température, la conductivité $\lambda(t)$ mesurée à une température t donnée vérifiant la relation :

$$\lambda(25) = \lambda(t) + a \cdot [25 - t]$$

relation dans laquelle

$\lambda$ (25) représente la conductivité de l'eau de refroidissement à 25°C,

a représente un coefficient variant en fonction de la concentration en lithium,

caractérisé en ce que le coefficient a variant en fonction de la concentration en lithium suivant une relation de la forme

$$a = 0,223 \, [\overset{+}{Li}] + 0,03,$$

ledit procédé consiste :

– à mesurer la température de l'eau de refroidissement,
– à déterminer une valeur approchée de a pour une valeur de référence de concentration en lithium notée

$$\left[Li^{+}_{r}\right],$$

la concentration en lithium de l'eau de refroidissement à la température t étant déterminée par la relation :

$$\left[Li^{+}\right] = 0,1 \left[\lambda(t) + (0,223 \left[Li^{+}_{r}\right] + 0,03)(25 - t)\right] - 3.$$

2. Procédé selon la revendication 1, caractérisé en ce que la concentration en lithium Li est déterminée par itération sur la valeur calculée pour obtenir une valeur de concentration [Li$^{+}$] par approximations successives.

3. Dispositif de mesure en continu de la concentration en lithium dans le circuit primaire de refroidissement du réacteur à eau pressurisée d'une centrale nucléaire, caractérisé en ce que ledit dispositif comporte :
– des moyens (1) de mesure de la conductivité électrique $\lambda(t)$ de l'eau de refroidissement dudit circuit primaire,
– des moyens (2) de mesure de la température de l'eau de refroidissement dudit circuit primaire,
– des moyens (3) de calcul de la concentration en lithium [Li$^{+}$] conformément à l'une des revendications 1 à 2 précédentes.

4. Dispositif selon la revendication 3, caractérisé en ce que lesdits moyens de mesure de la conductivité électrique comportent un capteur (10) de mesure de conductivité électrique.

5. Dispositif selon la revendication 3, caractérisé en ce que lesdits moyens de mesure de la température comportent une sonde de température (20).

6. Dispositif selon l'une des revendications 4 ou 5, caractérisé en ce que lesdits moyens de mesure de la conductivité électrique et de la température sont installés chacun dans un pot permettant de minimiser la rétention de dépôts radioactifs.

7. Dispositif selon l'une des revendications 3 à 6, caractérisé en ce qu'il comporte en outre des moyens (4) de mesure de la concentration en bore.

8. Dispositif selon l'une des revendications 3 à 7, caractérisé en ce que lesdits moyens (3) de calcul sont constitués par un calculateur (30) comportant
– une interface (300) de liaison de l'ensemble desdits moyens de mesure, ladite interface (300) comportant des moyens d'échantillonnage, de numérisation des signaux représentatifs respectivement de la conductivité électrique, de la température et de la concentration en bore ;
– une unité de mémoire (301) dans laquelle est implanté un programme de calcul et de détermination de la concentration en lithium conformément au procédé selon l'une des revendications 1 à 3 précédentes.

9. Dispositif selon la revendication 8, caractérisé en ce que ledit programme de calcul comporte un programme auxiliaire ou un sous-programme permettant de déterminer la valeur de concentration de référence en lithium

$$\left[Li^{+}_{r}\right]$$

en fonction de la concentration en bore [B] selon une spécification dite de "lithine décroissante", ladite valeur de concentration de référence en lithium

$$\left[Li^{+}_{r}\right]$$

vérifiant en fonction de la concentration en bore [B] les relations :

$$5\,\text{ppm} < \begin{bmatrix} B \end{bmatrix} < 270\ \text{ppm} \qquad \begin{bmatrix} Li_r^+ \end{bmatrix} = 0{,}7\ \text{ppm}$$

$$270\ \text{ppm} < \begin{bmatrix} B \end{bmatrix} < 1100\ \text{ppm} \qquad \begin{bmatrix} Li_r^+ \end{bmatrix} = 1{,}8.10^{-3} \begin{bmatrix} B \end{bmatrix} + 0{,}22$$

$$\begin{bmatrix} B \end{bmatrix} > 1100\ \text{ppm} \qquad \begin{bmatrix} Li_r^+ \end{bmatrix} = 2{,}2\ \text{ppm}$$

pour un pH de l'eau de refroidissement maintenu à une valeur comprise entre 6,5 et 7,0.

10. Dispositif selon la revendication 9, caractérisé en ce que ledit programme de calcul de la concentration en lithium [Li] en fonction des paramètres de mesure de la température t, de la conductivité électrique $\lambda(t)$ de l'eau de refroidissement et de sa concentration en bore [B] permet de déterminer en fonction de cette dernière, les concentrations en lithium [Li] selon les relations :

a) $\begin{bmatrix} B \end{bmatrix} = 0$

$$\begin{bmatrix} Li^+ \end{bmatrix} = \gamma \begin{bmatrix} \lambda(t) + a(25-t) \end{bmatrix} + \beta$$

b) $5\ \text{ppm} < \begin{bmatrix} B \end{bmatrix} < 270\ \text{ppm}$

$$\begin{bmatrix} Li^+ \end{bmatrix} = 0{,}1 \begin{bmatrix} \lambda(t) + 0{,}1861\ (25-t) \end{bmatrix} + \beta$$

c) $270\ \text{ppm} < \begin{bmatrix} B \end{bmatrix} < 1100\ \text{ppm}$

$$\begin{bmatrix} Li^+ \end{bmatrix} = 0{,}1 \begin{bmatrix} \lambda(t) + (4{,}014 . 10^{-4} . \begin{bmatrix} B \end{bmatrix} + 0{,}0791)(25-t) \end{bmatrix} + \beta$$

d) $\begin{bmatrix} B \end{bmatrix} > 1100\ \text{ppm}$

$$\begin{bmatrix} Li^+ \end{bmatrix} = 0{,}1 \begin{bmatrix} \lambda(t) + 0{,}5206\ (25-t) \end{bmatrix} + \beta .$$

relations dans lesquelles $\beta$ est un paramètre tenant compte des impuretés de l'eau de refroidissement.

11. Utilisation de procédé et du dispositif selon l'une des revendications 1 à 2 et 3 à 10 pour la régulation et le maintien de la concentration en lithium et de la valeur du pH de l'eau de refroidissement du circuit primaire d'un réacteur de centrale nucléaire à une valeur déterminée.

## Claims

1. Method for continuously measuring the lithium concentration in the primary cooling circuit of the pressurized-water reactor of a nuclear power station, said method consisting : in measuring the electrical conductivity $\lambda$ of the cooling water, or a sample thereof, of said primary circuit, in determining the lithium concentration by linear correlation between said electrical conductivity $\lambda$ of the cooling water and this concentration from a linear combination of the electrical conductivity having the form :

$$[\overset{+}{\text{Li}}] = \alpha \cdot \lambda + \beta$$

a relationship wherein :

$[Li^+]$:  represents the concentration in lithium ions, expressed in parts per million,

$\alpha$ :  represents a ratio coefficient;

$\beta$ :  represents a corrective term for the presence of impurities, if any, in the primary circuit cooling water, the term $\beta$ being determined by the periodic ancillary measurement of the lithium concentration by atomic absorption spectrometry,

said electrical conductivity $\lambda$ of the cooling water being a linear function of the temperature, the conductivity $\lambda$ (t) measured at a given temperature t, verifies the relationship :

$$\lambda(25) = \lambda(t) + a \cdot [25 - t]$$

a relationship in which,

$\lambda$ (25) : represents the conductivity of the cooling water at 25°C,

a : represents a coefficient that varies as a function of the lithium concentration,

characterised in that, with the coefficient $\underline{a}$ varying as a function of the lithium concentration according to a relationship having the form :

$$a = 0{,}223 [\overset{+}{\text{Li}}] + 0{,}03,$$

said method consists :

− in measuring the temperature of the cooling water,

− in determining a value close to $\underline{a}$ for a lithium concentration reference value marked $[\overset{+}{\text{Li}}]$ , the lithium concentration of the cooling water at the temperature t being determined by the relationship :

$$\left[\overset{+}{\text{Li}}\right] = 0{,}1 \left[\lambda(t) + \left(0{,}223\left[\overset{+}{\text{Li}}_{\text{r}}\right] + 0{,}03\right)(25 - t)\right] + \beta$$

2. Method according to claim 1 characterized in that the lithium concentration $[Li^+]$ is determined by iteration on the computed value to obtain a concentration value $Li^+$ by successive approximations

3. Device to continuously measure the concentration of lithium in the primary cooling circuit of the pressurized-water reactor of a nuclear power station, characterised in that said device comprises :

− means (1) to measure the conductivity $\lambda$ (t) of the cooling water of said primary circuit,

− means (2) to measure the temperature of the cooling water of said primary circuit,

− means (3) to compute the lithium concentration $[Li^+]$ according to any of the above claims 1 to 2.

4. A device according to claim 3 characterised in that said means to measure the electrical conductivity comprise a sensor (10) to measure electrical conductivity.

5. A device according to claim 3 characterised in that said means to measure the temperature comprise a temperature probe (20).

6. A device according to either of the claims 4 or 5 characterised in that said means for measuring electrical conductivity and temperature are each installed in a pot which makes it possible to reduce the retention of radioactive deposits to the minimum.

7. A device according to any of the above claims 3 to 6 further comprising means (4) to measure the boron concentration.

8. A device according to any of the above claims 3 to 7, characterised in that said computing means (3) consists of a computer (30) comprising :

− an interface (300) for the connection of all the said measuring means, said interface comprising means for the sampling and digitization of the signals respectively representing electrical conductivity, temperature and boron concentration,

− a memory unit (301) in which is implanted a program to compute and determine the lithium concentration according to the method of either of the claim 1 or 2.

9. A device according to claim 8, caracterised in that said computing program comprises an ancillary program or a sub-program used to determine the lithium concentration reference value

$$\left[\text{Li}^+_{\text{r}}\right]$$

as a function of the boron concentration [B] according to a so-called "decreasing lithium hydroxide" specification, said lithium concentration reference value

$$\left[ \text{Li}^+_{\ r} \right]$$

verifying, according to the boron concentration [B], the relationship :

$$5\text{ppm} < \left[ \text{B} \right] \ < \ 270 \ \text{ppm} \qquad \left[ \text{Li}^+_{\ r} \right] \ = \ 0{,}7 \ \text{ppm}$$

$$270 \ \text{ppm} \ < \ \left[ \text{B} \right] < \ 1100 \ \text{ppm} \qquad \left[ \text{Li}^+_{\ r} \right] = \ 1{,}8.10^{-3} \ \left[ \text{B} \right] \ + \ 0{,}22$$

$$\left[ \text{B} \right] \ > \ 1100 \ \text{ppm} \qquad \left[ \text{Li}_r \right] \ = \ 2{,}2 \ \text{ppm}.$$

for a pH of the cooling water kept at a value ranging between 6.5 and 7.0.

10. A device according to claim 9, characterised in that said program for computing the lithium concentration [Li⁺] , as a function of the measurement parameters of the temperature t , the electrical conductivity $\lambda$ (t) of the cooling water and its boron concentration [B], is used to determine, as a function of said boron concentration, the lithium concentrations [Li⁺] according to the relationships :

a) $\ |\text{B}| \ = \ 0$

$\qquad |\text{Li}^+| \ = \ \gamma \left[ \lambda(t) \ + \ a(25-t) \right] \ + \ \beta$

b) $\quad 5 \ \text{ppm} \ < \ |\text{B}| \ < \ 270 \ \text{ppm}$

$$\left[ \text{Li}^+ \right] \ = \ 0{,}1 \ \left[ \lambda(t) \ + \ 0{,}1861 \ (25-t) \right] \ + \ \beta$$

c) $\quad 270 \ \text{ppm} \ < \ \left[ \text{B} \right] \ < \ 1100 \ \text{ppm}$

$$\left[ \text{Li}^+ \right] \ = \ 0{,}1 \ \left[ \lambda(t) \ + \ (4{,}014 \ . \ 10^{-4} \ . \ \left[ \text{B} \right] + \ 0{,}0791) \ (25-t) \right] + \ \beta.$$

d) $\quad |\text{B}| \ > \ 1100 \ \text{ppm}$

$$\left[ \text{Li}^+ \right] \ = \ 0{,}1 \left[ \lambda(t) \ + \ 0{,}5206 \ (25-t) \right] \ + \ \beta.$$

relationships wherein $\beta$ is a parameter that takes into account impurities in the cooling water.

11. Use of the method and device according to claim 1 or 2 and claims 3 to 10 to continuously regulate and maintain the lithium concentration and pH value of the cooling water of the primary circuit of a nuclear power station reactor at a given value.

**Patentansprüche**

1. Verfahren zur fortlaufenden Messung der Lithiumkonzentration im primären Kühlkreislauf des Druckwasserreaktors eines Kernkraftwerks, wobei das Verfahren darin besteht, die elektrische Leitfähigkeit $\lambda$ des Kühlwassers des Primärkreislaufs oder einer Probe desselben zu messen, die Lithiumkonzentration durch lineare Korrelation zwischen der elektrischen Leitfähigkeit $\lambda$ des Kühlwassers und dieser Konzentration aufgrund einer linearen Kombination der elektrischen Leitfähigkeit der Form

$$[Li^+] = \alpha \cdot \lambda + \beta$$

zu bestimmen, eine Beziehung, in der:

[Li+] die in Teilen pro Million ausgedrückte Lithiumionenkonzentration,

$\alpha$ einen Proportionalitätskoeffizienten und

$\beta$ einen Korrekturterm für die Anwesenheit möglicher Verunreinigungen des Kühlwassers des Primärkreislaufs darstellt, wobei der Term $\beta$ durch eine periodische Hilfsmessung der Lithiumkonzentration mit Atomabsorptionsspektrometrie bestimmt wird,

wobei die elektrische Leitfähigkeit $\lambda$ des Kühlwassers eine lineare Funktion der Temperatur ist, indem die bei einer gegebenen Temperatur t gemessene Leitfähigkeit $\lambda(t)$ der Beziehung:

$$\lambda(25) = \lambda(t) + a \cdot [25 - t]$$

gehorcht, eine Beziehung, in der:

$\lambda(25)$ die elektrische Leitfähigkeit des Kühlwassers bei 25°C und

a einen sich als Funktion der Lithiumkonzentration ändernden Koeffizienten darstellt,

dadurch gekennzeichnet, daß unter Änderung des Koeffizienten a als Funktion der Lithiumkonzentration gemäß einer Beziehung der Form:

$$a = 0{,}223\,[Li^+] + 0{,}03$$

das Verfahren darauf beruht:

– die Temperatur des Kühlwassers zu messen,

– einen Näherungswert von a für einen mit $[Li_r^+]$ bezeichneten Referenzwert der Lithiumkonzentration zu bestimmen, wobei die Lithiumkonzentration des Kühlwassers bei der Temperatur t durch die Beziehung:

$$[Li^+] = 0{,}1\,[\lambda(t) + (0{,}223\,[Li_r^+] + 0{,}03)\,(25 - t)] + \beta$$

bestimmt wird.

2. Verfahren nach Anspruch 1, dadurch gekennzeichnet, daß die Konzentration von Lithium Li durch Iteration über den berechneten Wert bestimmt wird, um einen Wert für die Konzentration $[Li^+]$ durch aufeinanderfolgende Näherungen zu erhalten.

3. Vorrichtung zur fort:aufenden Messung der Lithiumkonzentration im primären Kühlkreislauf des Druckwasserreaktors eines Kernkraftwerks, dadurch gekennzeichnet, daß die Vorrichtung umfaßt :

– Mittel (1) für die Messung der elektrischen Leitfähigkeit $\lambda(t)$ des Kühlwassers des Primärkreislaufs,

– Mittel (2) für die Messung der Temperatur des Kühlwassers des Primärkreislaufs,

– Mittel (3) für die Berechnung der Lithiumkonzentration $[Li^+]$ gemäß einem der vorhergenden Ansprüche 1 bis 2.

4. Vorrichtung nach Anspruch 3, dadurch gekennzeichnet, daß die Mittel für die Messung der elektrischen Leitfähigkeit einen Meßwertgeber (10) für die elektrische Leitfähigkeit umfassen.

5. Vorrichtung nach Anspruch 3, dadurch gekennzeichnet, daß die Mittel für die Messung der Temperatur einen Temperaturfühler (20) umfassen.

6. Vorrichtung nach einem der Ansprüche 4 oder 5, dadurch gekennzeichnet, daß die Mittel für die Messung der elektrischen Leitfähigkeit und der Temperatur jeweils in einen Topf eingebaut sind, der die Rückhaltung von radioaktivem niederschlag auf ein Minimum zu beschränken erlaubt.

7. Vorrichtung nach einem der Ansprüche 3 bis 6, dadurch gekennzeichnet, daß sie weiterhin Mittel (4) zur Messung der Borkonzentration umfaßt.

8. Vorrichtung nach einem der Ansprüche 3 bis 7, dadurch gekennzeichnet, daß die Mittel (3) für die Berechnung durch einen Rechner (30) gebildet werden, der umfaßt:

– eine Schnittstelle (300) zur Verbindung der Gesamtheit der Mittel zur Messen, wobei die Schnittstelle (300) Mittel zur Probenahme und zur Digitalisierung der jeweils die elektrische Leitfähigkeit, die Temperatur und die Borkonzentration repräsentierenden Signale umfaßt;

– eine Speichereinheit (301), in der ein Berechnungs- und Bestimmungsprogramm der Lithiumkonzentration gemäß dem Verfahren nach einem der vorhergehenden Ansprüche 1 bis 3 implantiert ist.

9. Vorrichtung nach Anspruch 8, dadurch gekennzeichnet, daß das Berechnungsprogramm ein Hilfsprogramm oder ein Unterprogramm enthält, das den Referenzwert der Lithiumkonzentration $[Li^+]$ als Funktion der Borkonzentration [B] nach einer "abklingendes Lithiumhydroxid" benannten Spezifikation zu bestimmen gestattet, wobei der Referenzwert der Lithiumkonzentration $[Li_r^+]$ als Funktion der Borkonzentration [B] die Relationen:

$$5\ \text{ppm} < [B] < 270\ \text{ppm} \qquad [Li_r^+] = 0,7\ \text{ppm}$$

$$270\ \text{ppm} < [B] < 1100\ \text{ppm} \qquad [Li_r^+] = 1,8 \cdot 10^{-3}\ [B] + 0,22$$

$$[B] > 1100\ \text{ppm} \qquad [Li_r^+] = 2,2\ \text{ppm}$$

bei einem pH des Kühlwassers, das auf einem zwischen 6,5 und 7,0 befindlichen Wert gehalten wird, erfüllt.

10. Vorrichtung nach Anspruch 9, dadurch gekennzeichnet, daß es das Programm für die Berechnung der Lithiumkonzentration [Li+] als Funktion der Meßparameter Temperatur t, elektrische Leitfähigkeit $\lambda(t)$ des Kühlwassers und seiner Borkonzentration [B] erlaubt, als Funktion dieser letzteren die Lithiumkonzentrationen gemäß den Beziehungen:

$$a) \qquad [B] = 0$$
$$[Li^+] = \gamma\ [\lambda(t) + a(25 - t)] + \beta$$

$$b) \qquad 5\ \text{ppm} < [B] < 270\ \text{ppm}$$
$$[Li^+] = 0,1\ [\lambda(t) + 0,1861(25 - t)] + \beta$$

$$c) \qquad 270\ \text{ppm} < [B] < 1100\ \text{ppm}$$
$$[Li^+] = 0,1\ [\lambda(t) + (4,014 \cdot 10^{-4} \cdot [B] + 0,0791)(25 - t)] + \beta$$

$$d) \qquad [B] > 1100\ \text{ppm}$$
$$[Li^+] = 0,1\ [\lambda(t) + 0,5206(25 - t)] + \beta$$

zu bestimmen, wobei in diesen Beziehungen $\beta$ ein Parameter ist, der Verunreinigungen des Kühlwassers berücksichtigt.

11. Verwendung des Verfahrens und der Vorrichtung nach einem der Ansprüche 1 bis 2 und 3 bis 10 für die Regulierung und die Erhaltung der Lithiumkonzentration und des pH-Werts des Kühlwassers des Primärkreislaufs eines Reaktors eines Kernkraftwerks auf einem bestimmten Wert.

FIG_1

CIRCUIT PRIMAIRE PRINCIPAL

Fonctionnement normal en puissance
lithine décroissante

($^7$Li) LITHIUM (mg/kg)

ZONE DE

FONCTIONNEMENT

VALEUR DE RÉFÉRENCE À VISER

ZONE INTERDITE

Li trop élevé :

Revenir vers la
valeur de référence
par mise en service
du déminéralisateur à
lit cationique du RCV

Li trop faible :

Revenir vers la
valeur de référence
par ajout de $^7$Li OH

ZONE INTERDITE

BORE (mg/kg)

FIG. 2

CP

101　104　102

103

10　20

1　4　2

$\left[ Li^+ \right]$ 3001

300

30

301

UC

3

31

32

**FIG.3**

1011

1021

1020

103

102

101

1010

**FIG.4**